# EUROPÄISCHE PATENTSCHRIFT

(11) **EP 2 934 708 B1**
(45) Veröffentlichungstag und Bekanntmachung des Hinweises auf die Patenterteilung: **14.12.2016**
(21) Anmeldenummer: 15700585.1
(22) Anmeldetag: 16.01.2015
(51) Int. Cl.: A63B 53/14, A63B 57/50, A63B 60/16

(54) **VORRICHTUNG ZUM AUSBESSERN VON UNEBENHEITEN IN EINER AUF EINEM ERDBODEN ANGEORDNETEN GRÜNFLÄCHE UND MIT EINER SOLCHEN VORRICHTUNG VERSEHENER GOLFSCHLÄGER**
DEVICE FOR CORRECTING IRREGULARITIES ON THE SURFACE OF A GRASS, AND GOLF CLUB WITH SUCH A DEVICE
DISPOSITIF POUR RECTIFIER DES IRRÉGULARITÉS DE SURFACE D'UNE PELOUSE, ET CLUB DE GOLF MUNI D'UN TEL DISPOSITIF

(30) Priorität: 17.01.2014 AT 500292014
(43) Veröffentlichungstag der Anmeldung: 28.10.2015
(73) Patentinhaber: Hofmann&Lumpi OG, 6371 Aurach (AT)
(72) Erfinder: HOFMANN, Werner, 9220 Velden (AT); LUMPI, Hansjörg, 6371 Aurach (AT)
(74) Vertreter: Flügel Preissner Schober Seidel
(86) Internationale Anmeldenummer: PCT/EP2015/050796
(87) Internationale Veröffentlichungsnummer: WO 2015/107160

(56) Entgegenhaltungen:
- WO-A1-02/47770
- GB-A- 2 220 576
- GB-A- 190 416 896
- US-A- 4 925 190
- US-A- 5 511 785
- US-A1- 2007 060 412
- US-B1- 6 244 356

## Beschreibung

Die Erfindung betrifft eine Vorrichtung zum Ausbessern von Unebenheiten in einer auf einem Erdboden angeordneten Grünfläche. Die Vorrichtung ist geeignet, an einem Griff eines Golfschlägers befestigt zu werden.

Bei der Vorrichtung handelt es sich insbesondere um eine sogenannte Pitchgabel oder Divot Tool, einem beim Golfsport eingesetzten Hilfsmittel, um Vertiefungen oder Dellen, die durch aus vergleichsweise großer Höhe auf das sogenannte "Grün" eines Golfplatzes, einer auf einem Erdboden angeordneten Grünfläche, auftreffende Bälle entstanden sind, die sogenannten Pitchmarken, auszubessern. Diese Pitchmarken rühren daher, dass beim Golfen aus geringer Entfernung in Richtung Loch geschlagene Bälle häufig in einem hohen Bogen, dem sogenannten Pitch, gespielt werden, um zu vermeiden, dass der Ball über den kurzgeschorenen Rasen des "Grün" hinausrollt. Werden die Pitchmarken nicht repariert, dann wird die Fläche um das Loch herum uneben und das Einlochen eines Balles, das sogenannte Putten, bei späteren Runden erschwert. Um die Pitchmarken oder Unebenheiten auszubessern, wird mit einer in der Regel zwei-zinkigen Gabel rund um die Delle leicht schräg in den Rasen gestochen und der Kopf der Pitchgabel so zu der Delle gedrückt, dass die Grasnarbe gebrochen wird. Dies wird solange wiederholt, bis dort, wo die Delle war, eine pilzartige Auswölbung entsteht. Der Boden um die Pitchmark herum wird auf diese Weise gelockert und kann anschließend mit dem Putter wieder so eingeebnet werden, das kaum noch eine sichtbare Spur zurückbleibt.

Pitchgabeln gibt es in den unterschiedlichsten Ausführungsformen. Meist werden sie als separates Utensil während des Spiels von dem Golfer etwa in der Hosentasche mitgeführt.

Bekannt ist allerdings auch, die Pitchgabel am Ende des Griffes eines Golfschlägers zu befestigen, um den Golfschläger als Stiel für die Pitchgabel benutzen zu können. Eine derartige Pitchgabel wird beispielsweise in US 2006/0025230 A1 und US 5,423,543 offenbart.

Eine an dem Griffende eines Golfschlägers befestigte Pitchgabel, die entlang einer Längsachse verschiebbar angeordnet ist, um von einer Gebrauchsstellung, in der die Zinken der Pitchgabel aus dem Griffende herausragen, in eine Verstaustellung, in der die Zinken der Pitchgabel im Inneren des Griffes zum Liegen kommen, gebracht zu werden, beschreibt US 5,511,785. Derartige zwischen einer Gebrauchsstellung und einer Verstaustellung verschiebbare Pitchgabeln gehen zudem aus US 4,955,609, US 2003/0109336 A1 und US 7,351,158 B1 hervor. Darüber hinaus offenbaren US 4,925,190 und US 5,277,425 am Ende des Griffes eines Golfschlägers befestigte Pitchgabeln, die bei Nichtgebrauch durch eine separate Abdeckkappe geschützt sind. Die Abdeckkappe wird kraftschlüssig auf die Pitchgabel gesteckt.

Ein am Ende des Griffes eines Golfschlägers befestigtes Reparaturwerkzeug, das durch eine kraftschlüssig aufgesteckte Abdeckkappe bei Nichtgebrauch abgedeckt ist, wird ferner in US 2007/0060412 A1 offenbart. Das Reparaturwerkzeug wird mittels einer Schraube an dem Griffende befestigt.

WO 02/47770 A1 offenbart eine am Ende des Griffes eines Golfschlägers befestigte Pitchgabel, die bei Nichtgebrauch mit einer Abdeckkappe mittels einer Steck-Dreh-Bewegung entlang einer T-förmigen Nut abgedeckt wird.

Eine mit einem Schraubgewinde versehene Pitchgabel, die sich in das Griffende eines Golfschlägers einschrauben lässt, offenbart US 2007/0298900 A1. Die Pitchgabel weist einen mittleren Abschnitt auf, der mit einem Außengewinde versehen ist. Das Außengewinde ermöglicht es, eine Abdeckkappe aufzuschrauben, welche die Pitchgabel bei Nichtgebrauch abdeckt.

Eine am Ende des Griffes eines Golfschlägers befestigte Pitchgabel, die mittels eines durch eine Schraub-Spreiz-Verbindung erzeugten Reibschlusses befestigt wird, offenbart US 6,244,356 B1.

GB 16896 A offenbart einen aus zwei Einzelteilen bestehenden Golfschläger, der mittels einer durch eine L-förmige Nut vorgegebene Drehbewegung demontierbar ist. Weiterhin offenbart GB 2 220 576 A einen Golfschläger, der mittels einer durch eine L-förmige Nut bewirkte Drehbewegung demontierbar ist.

Der Erfindung liegt die Aufgabe zugrunde, eine Vorrichtung zum Ausbessern von Unebenheiten in einer auf einem Erdboden befindlichen Grünfläche, insbesondere dem Grün eines Golfplatzes, zu schaffen, die sich an dem Griff eines Golfschlägers befestigen lässt und durch welche die Handhabung des Golfschlägers nicht beeinträchtigt wird.

Diese Aufgabe wird durch eine Vorrichtung nach Anspruch 1 oder Anspruch 2 sowie einen Golfschläger nach Anspruch 12 gelöst. Vorteilhafte Ausgestaltungen der Vorrichtung und des Golfschlägers sind Gegenstand der Ansprüche 3 bis 11 und 13 bis 15.

Die erfindungsgemäße Vorrichtung zum Ausbessern von Unebenheiten in einer auf einem Erdboden angeordneten Grünfläche umfasst ein Befestigungselement, mittels dem die Vorrichtung an dem Griff eines Golfschlägers befestigt werden kann, und ein Einführelement, das geeignet ist, zum Ausbessern von Unebenheiten in den Erdboden eingeführt zu werden. Bei dem Einführelement handelt es sich insbesondere um eine Pitchgabel. Die Vorrichtung umfasst ferner ein Abdeckungselement oder Kappe zum Abdecken des Einführelements. Durch das Abdeckungselement wird der Benutzer des Golfschlägers vor Verletzungen geschützt, die durch das Einführelement verursacht werden können.

Darüber hinaus umfasst die Vorrichtung ein Verbindungselement, das sich mittels eines Bajonettverschlusses lösbar mit dem Abdeckungselement verbinden lässt. Die Verbindung von Abdeckungselement und Verbindungselement erfolgt demnach über eine Steck-Dreh-Bewegung. Zum Bilden des Bajonettverschlusses weist das Verbindungselement wenigstens eine Vertiefung auf, die einen Anfangsabschnitt und einen Endabschnitt hat. Das Abdeckungselement weist wenigstens einen Vorsprung auf, der in die Vertiefung eingreift und zum Verbinden von Abdeckungselement und Verbindungselement von dem Anfangsabschnitt in den Endabschnitt bewegt werden kann. Zum Lösen des Abdeckungselements von dem Verbindungselement wird der Vorsprung von dem Endabschnitt zurück in den Anfangsabschnitt bewegt. Alternativ oder zusätzlich können wenigstens eine Vertiefung an dem Abdeckungselement und wenigstens ein in die Vertiefung eingreifender Vorsprung an dem Verbindungselement ausgebildet sein.

Befindet sich der Vorsprung in dem Anfangsabschnitt, dann lässt sich das Abdeckungselement von dem Verbindungselement trennen und das Abdeckungselement damit von dem Einführelement entfernen. In dem Endabschnitt hingegen wird der Vorsprung form- und kraftschlüssig in der Vertiefung gehalten. Das Abdeckungselement ist auf diese Weise zuverlässig mit dem Verbindungselement verbunden, und zwar derart sicher, dass die Handhabung des Golfschlägers nicht beeinträchtigt wird. Weder löst sich das Abdeckungselement versehentlich beim Gebrauch des Golfschlägers noch wird der sogenannte Griffdruck, der für das Halten des Golfschlägers wichtig ist, durch das Abdeckungselement beeinflusst.

In einer bevorzugten Ausgestaltung der erfindungsgemäßen Vorrichtung hat das Verbindungselement eine Oberseite, eine Unterseite und eine Mantelfläche, die vorzugsweise zylindrisch, insbesondere kreiszylindrisch, ist. Das Verbindungselement setzt sich vorzugsweise aus einem oberen Teil und einem unteren Teil, der einen geringeren Durchmesser als der obere Teil hat, zusammen. Die Vertiefung ist als Nut ausgestaltet, die einer Bahnkurve folgend sich entlang der Mantelfläche erstreckt. Alternativ oder zusätzlich kann sich die Bahnkurve oder eine weitere Bahnkurve entlang einer vorzugsweise zylindrischen, insbesondere kreiszylindrischen, Innenfläche des Abdeckungselements erstrecken, und zwar insbesondere dann, wenn der Vorsprung alternativ oder zusätzlich an dem Verbindungselement ausgebildet ist.

Erfindungsgemäß hat die Bahnkurve im Übergangsbereich von dem Anfangsabschnitt zu dem Endabschnitt einen zumindest lokalen Tiefpunkt. Vorzugsweise ist zumindest im Bereich des Tiefpunktes das Vorzeichen der Steigung der Bahnkurve in dem Anfangsabschnitt umgekehrt zu dem Vorzeichen der Steigung in dem Endabschnitt. Erfindungsgemäß ist der Vorsprung entgegen der Wirkung einer in einer axialen Richtung wirkenden Rückstellkraft von dem Anfangsabschnitt zu dem Endabschnitt bewegbar. Wird der Vorsprung in dem Anfangsabschnitt entlang einer fallenden Bahnkurve bewegt, dann ist das Vorzeichen der Steigung der Bahnkurve beispielsweise negativ. Nach dem Erreichen des Tiefpunktes wechselt das Vorzeichen der Steigung der Bahnkurve und ist positiv. Der Vorsprung wird demnach in dem Endabschnitt entlang einer steigenden Bahnkurve bewegt. Insbesondere dann, wenn die Bewegung des Vorsprungs zum Tiefpunkt entgegen der Wirkung einer axialen Rückstellkraft, beispielsweise einer Federkraft, erfolgt, verhindert die steigende Bahnkurve, dass sich der Vorsprung selbsttätig zurückbewegt. Wird das Abdeckungselement demnach so weit gedreht, dass der Tiefpunkt überschritten wird, dann werden das Abdeckungselement und das Verbindungselement gegeneinander verspannt.

Zweckmäßigerweise wird der Endabschnitt durch einen Endanschlag für den Vorsprung begrenzt. Vorzugsweise nimmt die Steigung der Bahnkurve in dem Endabschnitt zu dem Endanschlag hin ab. Vorzugsweise befindet sich kurz vor dem Endanschlag ein lokaler Hochpunkt, das heißt die Bahnkurve fällt zum Endanschlag hin wieder leicht ab. Insbesondere dann, wenn die Bewegung des Vorsprungs zum Tiefpunkt entgegen der Wirkung einer axialen Rückstellkraft erfolgt, lässt sich durch die Steigung der Bahnkurve gezielt die Kraft vorgeben, mit welcher das Abdeckungselement und das Verbindungselement bei Erreichen des Endanschlags gegeneinander verspannt sein müssen, um einerseits einen festen Sitz und andererseits ein bequemes Lösen des Abdeckungselements zu gewährleisten. Durch den Endanschlag erhält der Benutzer zudem eine Rückmeldung, wenn das Abdeckungselement sicher mit dem Verbindungselement verbunden ist. Erfindungsgemäß hat das Abdeckungselement eine Oberseite und eine Unterseite und weist wenigstens einen an der Unterseite mündenden Hohlraum auf. Der Hohlraum ist geeignet, das Einführelement und das Verbindungselement aufzunehmen. Weitere Hohlräume können beispielsweise dazu dienen, dem Abdeckungselement eine bestimmte Verformungsfähigkeit oder Härte zu verleihen. Härtere Griffe bieten eine gute Kontrolle und ermutigen den Spieler oft dazu, den Schläger mit weniger Druck in der Hand zu halten. Weichere Griffe hingegen lassen sich in der Regel bequemer anfassen.

Von besonderem Vorteil ist es, wenn das Abdeckungselement zumindest bereichsweise, insbesondere im Bereich des Vorsprungs oder der Vertiefung, aus einem elastisch verformbaren Werkstoff gefertigt ist. Ein geeigneter Werkstoff ist beispielsweise Gummi. Gummi ist als Material leicht zu formen und zu produzieren und bietet ein festes, haftendes Gefühl. Andere geeignete Werkstoff können beilspielsweise Silikon, Elastomere oder sonstige elastisch verformbare Kunststoffe oder Mischungen aus den vorgenannten Materialien sein.

In einer bevorzugten Ausgestaltung der erfindungsgemäßen Vorrichtung weist das Abdeckungselement an der Unterseite eine Kontaktfläche auf, die geeignet ist, an einer Stirnfläche des Griffes oder eines Teil des Griffes eines Golfschlägers anzuliegen. Wird beispielsweise ein vorhandener Golfschläger mit der erfindungsgemäßen Vorrichtung nachgerüstet, ist es möglich, einen Teil des Griffes abzuschneiden und diesen durch ein Abdeckungselement zu ersetzen, das in Haptik und Griffstärke dem abgetrennten Teil entspricht. Die Schnittfläche bildet in diesem Fall die Stirnfläche.

Vorzugsweise weist die Kontaktfläche zumindest abschnittsweise Stellen mit einer reibungsvermindernden Oberfläche auf. Diese Stellen können beispielsweise durch die Hohlräume gebildet werden und dienen dazu, die Gleitreibung zwischen Stirnfläche und Kontaktfläche zu beeinflussen.

Wenn das Abdeckungselement insbesondere im Bereich des Vorsprungs oder der Vertiefung elastisch verformbar ist, dann ist es möglich, den Abstand zwischen der Kontaktfläche des Abdeckungselementes und der Stirnfläche des Griffes so vorzugeben, dass das Abdeckungselement bei dem Aufstecken auf das Verbindungselement etwas gestaucht werden muss, um den Vorsprung in den Endabschnitt zu bewegen. Durch die elastische Verformung, die mit der Stauchung einhergeht, entsteht eine in axialer Richtung wirkende Rückstellkraft, die im Tiefpunkt am größten ist und im Endabschnitt das Abdeckungselement und das Verbindungselement zuverlässig gegeneinander verspannt.

Zweckmäßigerweise weist das Abdeckungselement an der Oberseite eine Halterung auf, die geeignet ist, einen insbesondere chipförmigen Ballmarker zu halten. Mit dem Ballmarker wird auf dem Grün die Position eines Golfballs markiert, um diesen danach aufnehmen zu können. Als Ballmarker finden häufig Münzen oder auch dafür vorgesehene Druckknöpfe an Golfhandschuhen Verwendung. Zunehmend beliebter und häufig als Werbegeschenk verwendet sind chipförmige Ballmarker, die sich individuell gestalten oder bedrucken lassen.

Das Einführelement weist bevorzugt einen Halteabschnitt, der vorzugsweise eben ausgestaltet ist, und von dem Halteabschnitt abstehende Zinken, die vorzugsweise gewölbt ausgestaltet sind, auf. Das Einführelement ist damit ein Ausbesserungswerkzeug, eine sogenannte Pitchgabel, dessen Zinken um die Pitchmarke herum in den Rasen gestochen und in geeigneter Weise bewegt werden, um die Verformung der Grasnarbe rückgängig zu machen. Die Wölbung der Zinken trägt zu einem schonenden Einstechen der Zinken in den Rasen bei, so dass eine anhaltende Schädigung der Grasnarbe vermieden wird.

Um das Einführelement an dem Verbindungselement zu befestigen, weist das Verbindungselement an der Oberseite eine erste Öffnung auf, in welcher der Halteabschnitt angeordnet ist. Vorzugsweise weist das Verbindungselement an der Mantelfläche eine zweite Öffnung auf, in der eine den Halteabschnitt fixierende Sicherungsschraube aufgenommen ist. Zur Montage des Einführelements wird demnach der Halteabschnitt in die erste Öffnung gesteckt und anschließend die beispielsweise als Madenschraube ausgestaltete Sicherungsschraube in der zweiten, mit einem Gewinde versehenen Öffnung angezogen.

In einer bevorzugten Ausgestaltung der erfindungsgemäßen Vorrichtung sind das Befestigungselement und das Verbindungselement durch eine Schraubverbindung miteinander verbunden. Vorzugsweise ist das Verbindungselement zur Aufnahme einer sich vorzugsweise in der axialen Richtung erstreckenden Schraube mit einer sich von der Oberseite bis zur Unterseite erstreckenden Durchgangsöffnung versehen. Zweckmäßigerweise hat das Befestigungselement eine Oberseite und eine Unterseite und ist zum Abstützen einer mit der Schraube zusammenwirkenden Mutter mit einer insbesondere an der Unterseite ausgebildeten Anlagefläche versehen.

In diesem Zusammenhang ist es besonders vorteilhaft, wenn das Verbindungselement an der Unterseite eine Klemmfläche aufweist, die sich unter einem ersten Winkel schräg zu der axialen Richtung erstreckt, und das Befestigungselement an der Oberseite eine Klemmfläche aufweist, die ein Zentrum hat und sich unter einem zweiten Winkel schräg zu der axialen Richtung erstreckt. Der erste Winkel und der zweite Winkel bilden vorzugsweise Nebenwinkel, ergänzen sich also zu 180°. Die Klemmflächen verlaufen in diesem Fall parallel. Vorzugsweise betragen der erste Winkel zwischen 130° und 170°, insbesondere zwischen 140° und 160°, beispielsweise ca. 150°, und der zweite Winkel zwischen 10° und 50°, insbesondere zwischen 20° und 40°, beispielsweise ca. 30°.

Bevorzugt weist das Befestigungselement ein sich von der Oberseite bis zu der Anlagefläche für die Mutter in der axialen Richtung erstreckendes Langloch auf, das die Schraube mit radialem Spiel aufnimmt und außerhalb des Zentrums der Klemmfläche angeordnet ist. Durch das Anziehen der Schraube werden das Verbindungselement und das Befestigungselement an den Klemmflächen gegeneinander verspannt. Die außermittige Anordnung des Langloches und das radiale Spiel bewirken, dass das Verbindungselement und das Befestigungselement beim Anziehen der Schraube ein Stück weit entlang der Klemmflächen auseinandergleiten bis die Schraube in radialer Richtung an den Rand des Langloches anschlägt. Der sich mit dem Auseinandergleiten in radialer Richtung ergebende Versatz von Verbindungselement und Befestigungselement ermöglicht es, die erfindungsgemäße Vorrichtung kraftschlüssig an insbesondere dem Griff eines Golfschlägers zu befestigen.

In einer weiteren bevorzugten Ausgestaltung der erfindungsgemäßen Vorrichtung sind das Befestigungselement und das Verbindungselement zwar ebenfalls durch eine Schraubverbindung miteinander verbunden, das Befestigungselement umfasst aber wenigstens ein aus einem verformbaren Werkstoff bestehendes Klemmelement und wenigstens ein das Klemmelement beaufschlagendes Druckelement. Das Klemmelement und das Druckelement sind vorzugsweise mittels der Schraubverbindung gegeneinander verspannt. Beim Verspannen wird das Klemmelement verformt. Eine auf diese Weise entstehende Ausbauchung des Klemmelementes ermöglicht es, die erfindungsgemäße Vorrichtung kraftschlüssig an insbesondere dem Griff eines Golfschlägers zu befestigen. Das vergleichsweise starke Ausbauchen des Klemmelementes ermöglicht zudem, Fertigungstoleranzen auszugleichen.

In einer anderen bevorzugten Ausgestaltung der erfindungsgemäßen Vorrichtung sind das Befestigungselement und das Verbindungselement einteilig ausgestaltet. Das Befestigungselement weist vorzugsweise eine Umfangsfläche auf, die geeignet ist, stoffschlüssig an einer Innenfläche des Griffes befestigt zu werden.

Der erfindungsgemäße Golfschläger, der insbesondere als Putter ausgestaltet ist, umfasst einen Schaft, einen Griff, der an einem Ende des Schafts angeordnet ist, und einen Kopf, der an dem anderen Ende des Schaftes angeordnet ist. Der Golfschläger zeichnet sich dadurch aus, dass die erfindungsgemäße Vorrichtung an dem Griff befestigt ist.

In einer bevorzugten Ausgestaltung des erfindungsgemäßen Golfschlägers weist der Griff einen insbesondere rohrförmigen Hohlraum auf, der eine Innenfläche hat und in dem das Befestigungselement und/oder das Verbindungselement, insbesondere der untere Teil des Verbindungselementes, angeordnet sind. Der Hohlraum kann beispielsweise durch den Schaft gebildet werden.

Das Befestigungselement ist bevorzugt mittels Kraftschluss mit dem Griff verbunden. Diese Ausgestaltung bietet sich an, wenn die erfindungsgemäße Vorrichtung bei herkömmlichen Golfschlägern nachgerüstet wird. Vorzugsweise liegt die Umfangsfläche des Befestigungselementes oder das Klemmelement kraftschlüssig an der Innenfläche des Griffes an. Der Versatz von Verbindungselement und Befestigungselement oder das Ausbauchen des Klemmelements rufen einen wirksamen Kraftschluss hervor, der gewährleistet, dass die erfindungsgemäße Vorrichtung sicher und dauerhaft mit dem Griff des Golfschlägers verbunden bleibt.

Das Befestigungselement kann jedoch alternativ oder zusätzlich mittels Stoffschluss mit dem Griff verbunden sein. In diesem Fall liegt vorzugsweise die Umfangsfläche des Befestigungselementes, auf die ein Klebstoff aufgetragen werden kann, stoffschlüssig an der Innenfläche des Griffes an.

Einzelheiten und weitere Vorteile der Erfindung ergeben sich aus der nachfolgenden Beschreibung von bevorzugten Ausführungsbeispielen. In den die Ausführungsbeispiele lediglich schematisch veranschaulichenden Zeichnungen zeigen im Einzelnen:
- Fig. 1a: eine Explosionsdarstellung eines Golfschlägers, die eine erste Ausführungsform der erfindungsgemäßen Vorrichtung zeigt;
- Fig. 1b: einen Längsschnitt durch die erste Ausführungsform;
- Fig. 2a: eine perspektivische Ansicht von Verbindungselement und Befestigungselement gemäß einer zweiten Ausführungsform der erfindungsgemäßen Vorrichtung;
- Fig. 2b: eine Seitenansicht von Verbindungselement und Befestigungselement gemäß der zweiten Ausführungsform;
- Fig. 2c: eine weitere Seitenansicht gemäß Fig. 2b;
- Fig. 2d: einen Schnitt entlang der Linie IId-IId in Fig. 2c;
- Fig. 3: einen Längsschnitt durch eine dritte Ausführungsform der erfindungsgemäßen Vorrichtung;
- Fig. 4a: eine perspektivische Ansicht des erfindungsgemäßen Golfschlägers bei abgenommenem Abdeckungselement;
- Fig. 4b: eine vergrößerte Darstellung des in Fig. 4a mit IVb gekennzeichneten Bereichs;
- Fig. 5a: eine perspektivische Ansicht eines Abdeckungselementes;
- Fig. 5b: eine vergrößerte Darstellung des in Fig. 5a mit Vb gekennzeichneten Bereichs;
- Fig. 6: eine perspektivische Ansicht eines Verbindungselementes;
- Fig. 7a: eine Draufsicht auf den erfindungsgemäßen Golfschläger, die das Abdeckungselement in einer entriegelten Stellung zeigt;
- Fig. 7b: einen Schnitt entlang der Linie VIIb-VIIb in Fig. 7a;
- Fig. 7c: eine vergrößerte Darstellung des in Fig. 7b mit VIIc gekennzeichneten Bereichs;
- Fig. 8a: eine Draufsicht auf den erfindungsgemäßen Golfschläger, die das Abdeckungselement in einer verriegelten Stellung zeigt;
- Fig. 8b: einen Schnitt entlang der Linie VIIIb-VIIIb in Fig. 8a und
- Fig. 8c: eine vergrößerte Darstellung des in Fig. 8b mit VIIIc gekennzeichneten Bereichs.

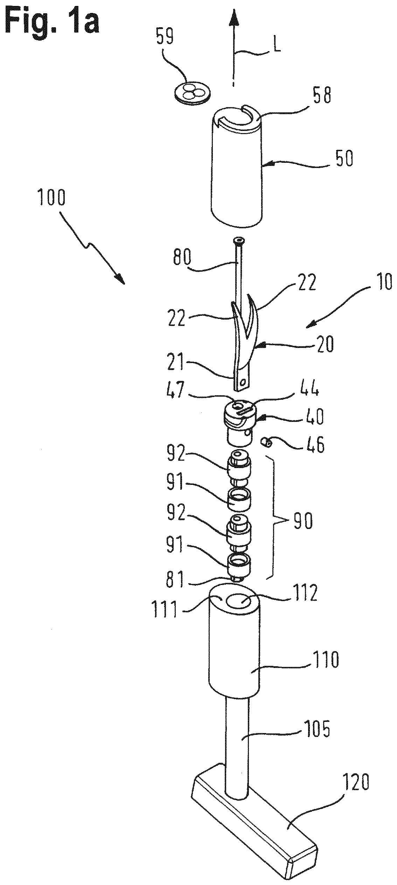

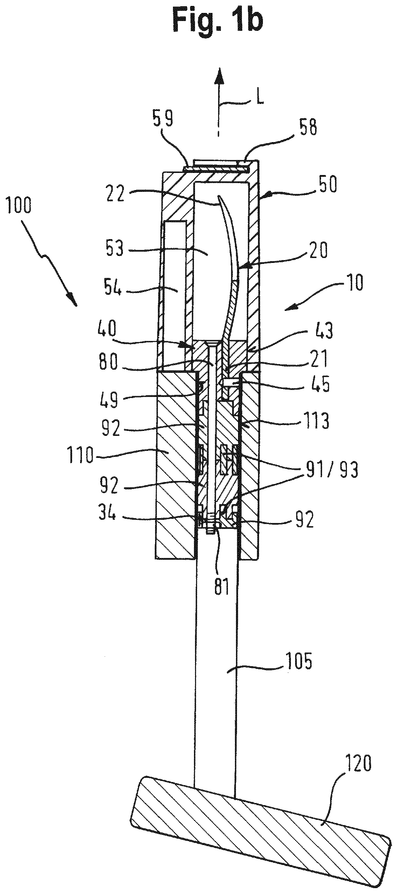

Der in den Fign. 1a und 1b dargestellte Golfschläger 100 ist insbesondere als Putter ausgestaltet und umfasst einen Schaft 105, einen Griff 110, der an einem Ende des Schafts 105 angeordnet ist, einen Kopf 120, der an dem anderen Ende des Schafts 105 angeordnet ist, und eine Vorrichtung 10, die zum Ausbessern von Unebenheiten in einer auf einem Erdboden angeordneten Grünfläche dient und an dem Griff 110 befestigt ist.

Die Vorrichtung 10 umfasst ein als Pitchgabel ausgestaltetes Einführelement 20, ein das Einführelement 20 abdeckendes Abdeckungselement 50, ein Verbindungselement 40 und ein Befestigungselement 30, 90.

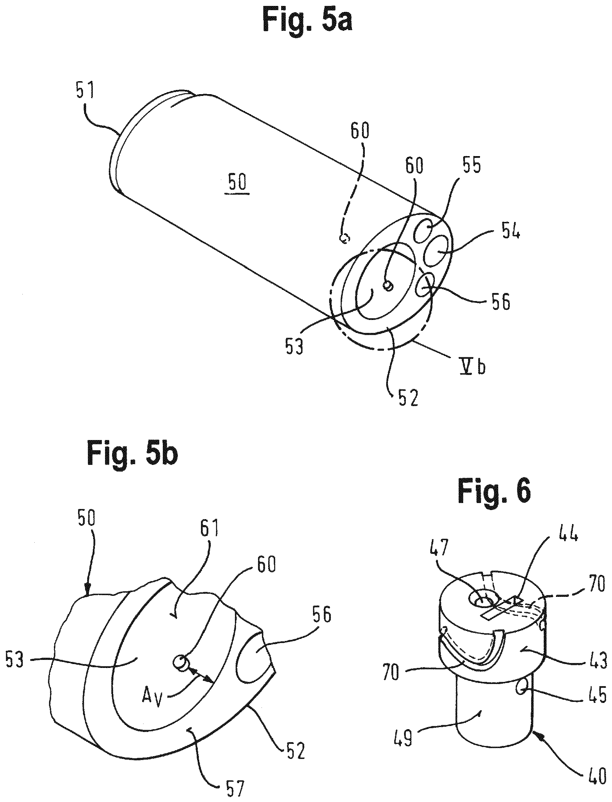

Das Einführelement 20 weist einen eben ausgestalteten Halteabschnitt 21 und von dem Haltabschnitt 21 abstehende Zinken 22 auf. Die Zinken 22 sind gewölbt ausgestaltet. Das Verbindungselement 40 hat eine dem Befestigungselement 30, 90 abgewandte Oberseite 41 und eine dem Befestigungselement 30, 90 zugewandte Unterseite 42 und setzt sich, wie insbesondere auch Fig. 6 zu erkennen gibt, aus einem oberen Teil und einem unteren Teil zusammen, die jeweils kreiszylindrisch ausgestaltet sind. Der untere Teil, der dem Befestigungselement 30, 90 zugewandt ist, verfügt über einen geringeren Durchmesser als der obere Teil. An der Oberseite 41 weist das Verbindungselement 40 eine erste Öffnung 44 auf, in welcher der Halteabschnitt 21 angeordnet ist. Eine zweite Öffnung 45 ist im Bereich des unteren Teils des Verbindungselements 40 angeordnet und erstreckt sich von einer Mantelfläche 49 bis zu der ersten Öffnung 44. Die zweite Öffnung 45 ist mit einem Innengewinde versehen, in das eine als Madenschraube ausgestaltete Sicherungsschraube 46 eingeschraubt ist, um den Halteabschnitt 21 in der ersten Öffnung 44 zu fixieren.

Das Befestigungselement 90 und das Verbindungselement 40 sind in einer ersten Ausführungsform der Vorrichtung 10 durch eine Schraubverbindung, die eine Schraube 80 und eine Mutter 81 umfasst, miteinander verbunden. Zur Aufnahme der sich in einer axialen Richtung L erstreckenden Schraube 80 ist das Verbindungselement 40 mit einer sich von der Oberseite 41 bis zur Unterseite 42 erstreckenden Durchgangsöffnung 47 versehen.

Das Befestigungselement 90 setzt sich bei der in den Fign. 1a und 1b gezeigten ersten Ausführungsform der Vorrichtung 10 aus einer Vielzahl an Klemmelementen 91 und Druckelementen 92 zusammen, die einander abwechselnd in axialer Richtung L hintereinander angeordnet sind. Die Klemmelemente 91 und die Druckelemente 92 werden durch die Schraubverbindung 80, 81 gegeneinander verspannt. Zu diesem Zweck befindet sich an dem in axialer Richtung L untersten Druckelement 92 eine Anlagefläche 34 für die Mutter 81. Die Klemmelemente 91, die aus einem verformbaren Werkstoff bestehen, beispielsweise Gummi oder Kunststoff, werden durch die Druckelemente 91 in der axialen Richtung L beaufschlagt und dabei gestaucht. Die Stauchung ruft eine Ausbauchung 93 hervor, die durch zwischen den Druckelementen 92 ausgebildete Schlitze dringt und auf diese Weise an der Innenfläche 113 eines Hohlraums 112 des Griffs 110 einen Kraftschluss hervorruft, der die Vorrichtung 10 zuverlässig an dem Griff 110 hält. Der rohrförmige Hohlraum 112 wird, wie insbesondere Fig. 1b zu erkennen gibt, durch die Wandung des Schafts 105 im Bereich des Griffs 110 gebildet, so dass sich aufgrund der Festigkeit der Wandung eine sichere kraftschlüssige Verbindung ergibt.

Das Abdeckungselement 50 hat eine dem Griff 110 abgewandte Oberseite 51 und eine dem Griff 110 zugewandte Unterseite 52. Ein an der Unterseite 52 mündender Hohlraum 53 nimmt das Einführelement 20 und den oberen Teil des Verbindungselements 40 auf. Der untere Teil des Verbindungselements 40 hingegen kommt in dem Hohlraum 112 zu liegen. Parallel zu dem Hohlraum 53 erstrecken sich in axialer Richtung L Hohlräume 54, 55, 56, wie insbesondere auch Fig. 5a zu erkennen gibt. Das Abdeckungselement 50 weist an der Unterseite 52 eine Kontaktfläche 57 auf, die an einer Stirnfläche 111 des Griffs 110 anliegt, wenn das Abdeckungselement 50 mit dem Verbindungselement 40 verbunden ist. Die Hohlräume 54, 55, 56, welche die Verformungsfähigkeit des Abdeckungselement 50 beeinflussen, münden an der Kontaktfläche 57 und beeinflussen damit zugleich die Gleitreibung zwischen Kontaktfläche 57 und Stirnfläche 111. Die Hohlräume 54, 55, 56 stellen damit im Bereich der Kontaktfläche 57 Stellen mit einer reibungsvermindernden Oberfläche dar. An der Oberseite 51 weist das Abdeckungselement 50 eine Halterung 58 auf, die dazu dient, einen chipförmigen Ballmarker 59 zu halten.

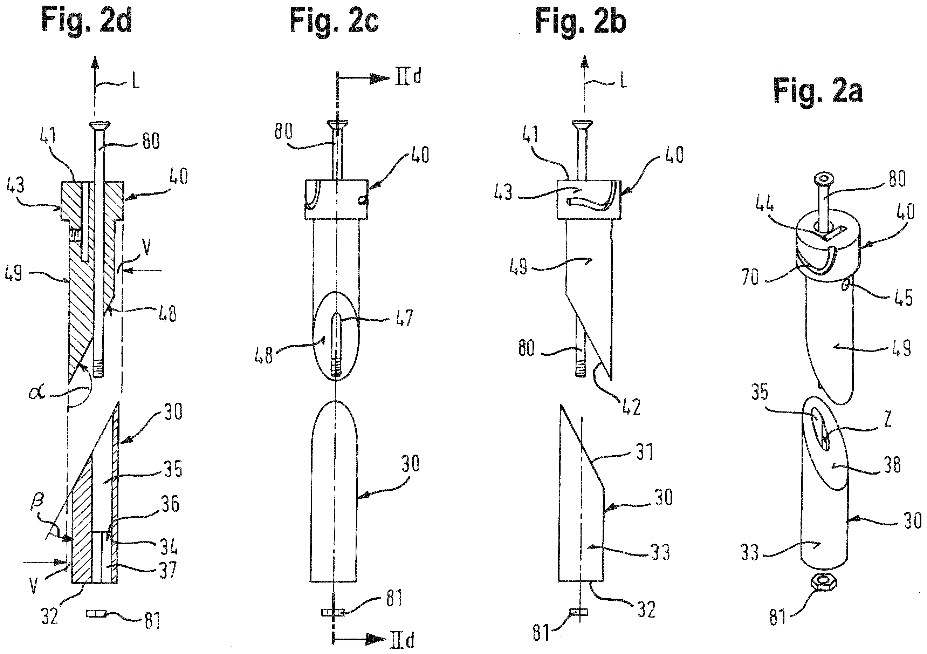

Wie die Fign. 2a bis 2d zu erkennen geben, weist die zweite Ausführungsform der Vorrichtung 10 ein Befestigungselement 30 auf, das eine dem Verbindungselement 40 zugewandte Oberseite 31 und eine dem Verbindungselement 40 abgewandte Unterseite 32 hat. Das Befestigungselement 30 ist kreiszylindrisch ausgestaltet und weist eine Umfangsfläche 33 auf. An der Unterseite 42 bildet das Verbindungselement 40 eine Klemmfläche 48, die sich unter einem ersten Winkel α schräg zu der axialen Richtung L erstreckt. Das Befestigungselement 30 bildet an der Oberseite 31 eine Klemmfläche 38, die ein Zentrum Z hat und sich unter einem zweiten Winkel β schräg zu der axialen Richtung L erstreckt. Der erste Winkel α und der zweite Winkel β bilden Nebenwinkel, ergänzen sich also zu 180°. Im vorliegenden Fall beträgt der erste Winkel α ca. 150° und der zweite Winkel β ca. 30°. Die Klemmflächen 48, 38 verlaufen demnach parallel. Je nach Anwendungsfall können die Klemmflächen 38, 48 jedoch auch einen Winkel einschließen. Durch das Befestigungselement 30 erstreckt sich von der Oberseite 31 bis zu der die Mutter 81 abstützenden Anlagefläche 34 ein Langloch 35, das die Schraube 80 mit einem Spiel in radialer Richtung, also in einer Richtung senkrecht zu der axialen Richtung L, aufnimmt und außerhalb des Zentrums Z der Klemmfläche 38 angeordnet ist. Die Anlagefläche 34 wird durch einen Absatz 36 in einer Vertiefung 37 an der Unterseite 32 gebildet. Die Vertiefung 37 nimmt die Mutter 81 gegen ein Drehen gesichert auf.

Durch das Anziehen der Schraube 80 werden das Verbindungselement 40 und das Befestigungselement 30 an den Klemmflächen 38, 48 gegeneinander verspannt. Die außermittige Anordnung des Langlochs 35 und das radiale Spiel der Schraube 80 bewirken, dass das Verbindungselement 40 und das Befestigungselement 30 beim Anziehen der Schraube 80 ein Stück weit entlang der Klemmflächen 38, 48 auseinandergleiten, und zwar so weit, bis die Schraube 80 in radialer Richtung an den Rand des Langlochs 35 anschlägt. Auf diese Weise ergibt sich in radialer Richtung ein Versatz V von Verbindungselement 40 und Befestigungselement 30, wie insbesondere in Fig. 2d zu erkennen ist. Der untere Teil des Verbindungselements 40 und des Befestigungselements 30 werden zur Befestigung der Vorrichtung 10 an dem Golfschläger 100 in dem Hohlraum 112 angeordnet. Wird die Schraube 80 angezogen, dann bewirkt der sich hierdurch ergebende Versatz V, dass die Mantelfläche 49 des Verbindungselementes 40 und die Umfangsfläche 33 des Befestigungselements (30) gegen die Innenfläche 113 gedrückt werden, wodurch sich ein Kraftschluss zwischen Befestigungselement 30 und Verbindungselement 40 einerseits und dem Griff 110 andererseits ergibt.

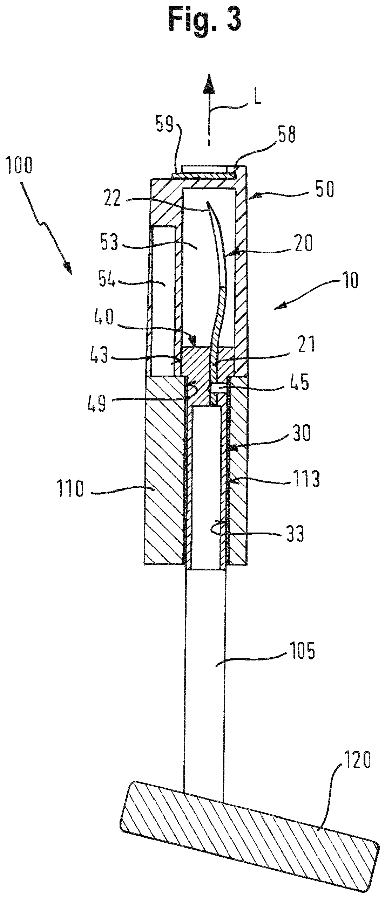

Wie Fig. 3 zu erkennen gibt, sind bei der dritten Ausführungsform der Vorrichtung 10 das Befestigungselement 30 und das Verbindungselement 40 einteilig ausgestaltet. Die Umfangsfläche 33 des Befestigungselementes 30 und die Mantelfläche 49 im Bereich des unteren Teils des Verbindungselementes 40 bilden eine Befestigungsfläche, die an der Innenfläche 113 anliegt und - beispielsweise mit einem Klebstoff beschichtet - einen Stoffschluss zwischen dem Befestigungselement 30 und dem Verbindungselement 40 einerseits und dem Griff 110 andererseits bewirkt.

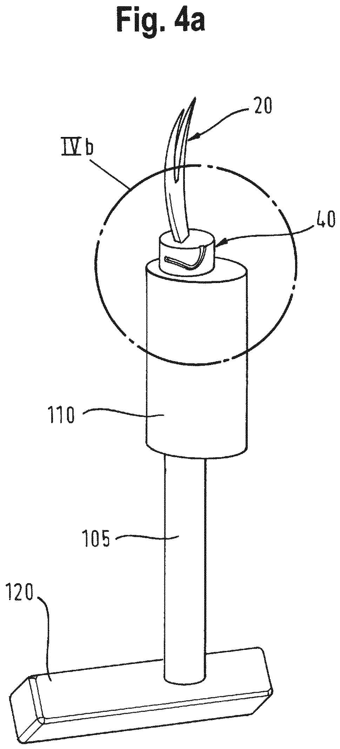

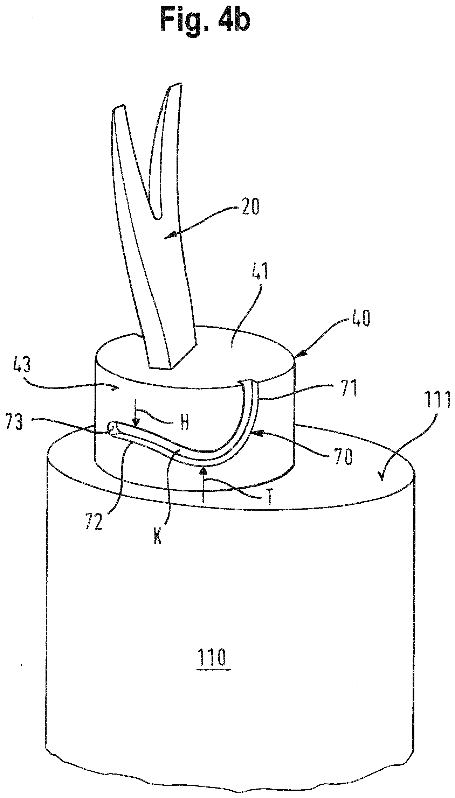

Die unterschiedlichen Ausführungsformen der Vorrichtung 10 unterscheiden sich in der Ausgestaltung des Befestigungselements 30 und der Art der Befestigung der Vorrichtung 10 an dem Golfschläger 100. Gemein haben die Ausführungsformen jedoch die Ausgestaltung des Abdeckungselements 50 und die lösbare Verbindung des Abdeckungselements 50 mit dem Verbindungselement 40 mittels eines Bajonettverschlusses. Wie insbesondere die Fign. 4a und 4b sowie Fig. 6 zu erkennen geben, weist zum Bilden des Bajonettverschlusses das Verbindungselement 40 zwei Vertiefungen 70 auf, die als Nut an einander abgewandten Bereichen der Mantelfläche 43 ausgestaltet sind. Das Abdeckungselement 50 weist zwei Vorsprünge oder Nocken 60 auf, die an einer Innenfläche 61 des Hohlraums 53 ausgebildet sind und bei auf das Verbindungselement 40 aufgestecktem Abdeckungselement 50 in die Vertiefungen 70 eingreifen. Wie die Fign. 5a und 5b zu erkennen geben, befinden sich die Vorsprünge 60 in einem Abstand Av von der Kontaktfläche 57.

Die Vertiefungen 70 folgen jeweils einer Bahnkurve K, die, wie insbesondere Fig. 4b zu erkennen gibt, sich von einem an der Oberseite 41 mündenden Anfangsabschnitt 71 zu einem an einem Endanschlag 73 endenden Endabschnitt 72 erstreckt. Im Übergangsbereich von dem Anfangsabschnitt 71 zu dem Endabschnitt 72 hat die Bahnkurve K einen lokalen Tiefpunkt T, der sich in einem Abstand A_{T} von der Stirnfläche 111 befindet und in dessen Bereich das Vorzeichen der Steigung der Bahnkurve K wechselt. Im Bereich des Anfangsabschnitts 71 ist die Bahnkurve K fallend und steigt nach Erreichen des Tiefpunkts T im Bereich des Endabschnitts 72 an. Die Steigung der Bahnkurve K verringert sich in dem Endabschnitt 72. Bevor ein lokaler Hochpunkt H kurz vor dem Endanschlag 73 erreicht wird, verläuft die Bahnkurve K im Wesentlichen parallel zu der Stirnfläche 111. Die Vertiefungen 70 ähneln demnach einem *liegenden L.*

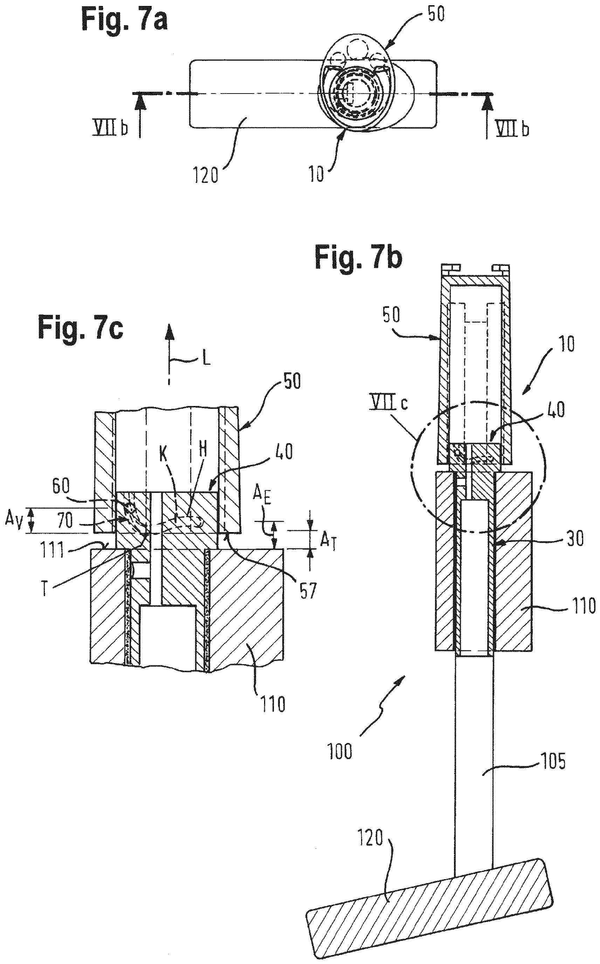

Das Abdeckungselement 50 vervollständigt den Griff 110 und besteht daher aus einem Werkstoff, der die Anforderungen eines Golfers an Haptik und Härte eines Griffs erfüllt, wie beispielsweise Gummi. Gummi ist bekanntlich ein elastisch verformbarer Werkstoff. Das Abdeckungselement 50 lässt sich demnach beim Aufsetzen auf die Stirnfläche 111 ein Stück weit stauchen, wodurch eine Rückstellkraft in axialer Richtung L erzeugt wird. Dies wird ausgenutzt, wenn das Abdeckungselement 50 mittels einer Steck-Dreh-Bewegung mit dem Verbindungselement 40 verbunden wird, wie anschaulich in den Fign. 7a bis 8c zu erkennen ist.

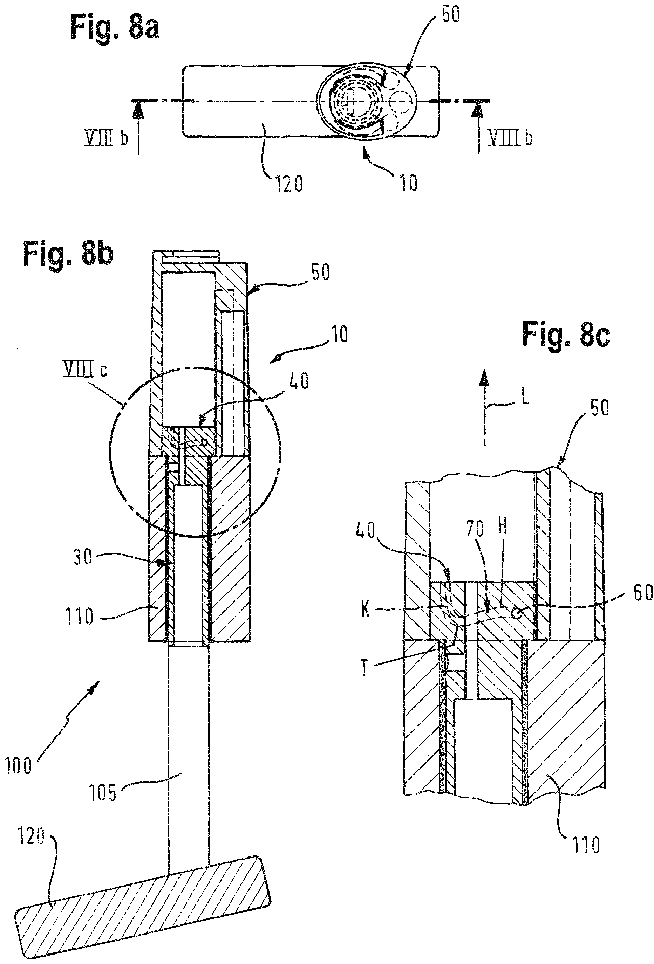

In den Fign. 7a, 7b und 7c ist das Abdeckungselement 50 nach dem Aufstecken auf das Verbindungselement 40 gezeigt. Das Abdeckungselement 50 ist in dieser entriegelten Position um ca. 90° verdreht zu der in den Fign. 8a, 8b und 8c gezeigten verriegelten Position, in welcher der Vorsprung 60 an dem Endanschlag 73 anliegt, wie insbesondere Fig. 7a zu erkennen gibt. Der Vorsprung 60 ist ein Stück weit in die zu Beginn des Anfangsabschnitts 71 nahezu senkrecht verlaufende Vertiefung 70 eingedrungen, wie insbesondere Fig. 7c zu erkennen gibt. Um den Vorsprung 60 von dem Anfangsabschnitt 71 in den Endabschnitt 72 zu bewegen, ist es erforderlich, das Abdeckungselement 50 zu drehen, wodurch der Vorsprung 60 entlang der Bahnkurve K geführt wird. Dadurch, dass die Bahnkurve K im Bereich des Anfangsabschnitts 71 fallend ist, nähert sich das Abdeckungselement 50 durch die Drehbewegung der Stirnfläche 111 des Griffs 110. Bevor der Vorsprung 60 den Tiefpunkt T erreicht, liegt die Kontaktfläche 57 an der Stirnfläche 111 an. Eine Bewegung des Vorsprungs 60 über den Tiefpunkt T hinaus erfordert demnach eine Stauchung des Abdeckungselementes 50.

Die Größe der Stauchung ergibt sich aus der Differenz zwischen dem Abstand A_{T} und dem Abstand, den der gerade durchlaufende Punkt der Bahnkurve K zu der Stirnfläche 111 hat. Demnach ist die Stauchung im Bereich des Tiefpunkts T, der sich in einem minimalen Abstand A_{T} zu der Stirnfläche 11 befindet, am größten und nimmt zu dem Endanschlag 73, der sich in einem Abstand A_{E} zu der Stirnfläche 11 befindet, hin wieder ab. Die sich durch die Stauchung des Abdeckungselementes 50 in axialer Richtung L ergebende Rückstellkraft presst den Vorsprung 60 an den in axialer Richtung L unteren Rand der Vertiefung 70. Der Hochpunkt H, der sich kurz vor dem Endanschlag 73 befindet und nach dessen Erreichen die Bahnkurve K zu dem Endanschlag 73 hin wieder leicht abfällt, gewährleistet damit, dass der Vorsprung 60 form- und kraftschlüssig an dem Endanschlag 73 gehalten wird, wie insbesondere Fig. 8c zu erkennen gibt. Das Abdeckungselement 50 und das Verbindungselement 40 sind, wenn der Vorsprung 60 an dem Endabschlag 73 anliegt, damit zuverlässig verriegelt.

Die zuvor beschriebene Vorrichtung 10 ergänzt den Golfschläger 100 um ein Ausbesserungswerkzeug, das bei Nichtgebrauch durch das Abdeckungselement 50 zuverlässig verstaut ist. Der durch das Eingreifen des Vorsprungs 60 in die Vertiefung 70 und die Ausbildung der Vertiefung 70 als sich entlang der Mantelfläche 43 erstreckende Bahnkurve K ergebende Bajonettverschluss ermöglicht mittels einer einfach auszuführenden Steck-Dreh-Bewegung, das Abdeckungselement 50 lösbar mit dem Verbindungselement 40 zu verbinden, und durch eine umgekehrte Drehbewegung wieder einfach zu lösen. Zugleich gewährleistet der Bajonettverschluss in der verriegelten Position des Abdeckungselements 50 einen form- und kraftschlüssigen Halt des Vorsprungs 60 in der Vertiefung 70, der ein unbeabsichtigtes Lösen des Abdeckungselements 50 verhindert und damit die Handhabung der Golfschlägers 100 nicht beeinträchtigt.

### Bezugszeichenliste

- 10: Vorrichtung
- 20: Einführelement
- 21: Halteabschnitt
- 22: Zinken
- 30: Befestigungselement
- 31: Oberseite
- 32: Unterseite
- 33: Umfangsfläche
- 34: Anlagefläche
- 35: Langloch
- 36: Absatz
- 37: Vertiefung
- 38: Klemmfläche
- 40: Verbindungselement
- 41: Oberseite
- 42: Unterseite
- 43: Mantelfläche
- 44: erste Öffnung
- 45: zweite Öffnung
- 46: Sicherungsschraube
- 47: Durchgangsöffnung
- 48: Klemmfläche
- 49: Mantelfläche
- 50: Abdeckungselement
- 51: Oberseite
- 52: Unterseite
- 53: Hohlraum
- 54: Hohlraum
- 55: Hohlraum
- 56: Hohlraum
- 57: Kontaktfläche
- 58: Halterung
- 59: Ballmarker
- 60: Vorsprung
- 61: Innenfläche
- 70: Vertiefung
- 71: Anfangsabschnitt
- 72: Endabschnitt
- 73: Endanschlag
- 80: Schraube
- 81: Mutter
- 90: Befestigungselement
- 91: Klemmelement
- 92: Druckelement
- 93: Ausbauchung
- 100: Golfschläger
- 105: Schaft
- 110: Griff
- 111: Stirnfläche
- 112: Hohlraum
- 113: Innenfläche
- 120: Kopf

- Av: Abstand
- A_{E}: Abstand
- A_{T}: Abstand
- H: Hochpunkt
- K: Bahnkurve
- L: axiale Richtung
- T: Tiefpunkt
- V: Versatz
- Z: Zentrum
- α: Winkel
- β: Winkel

## Patentansprüche

1. Vorrichtung zum Ausbessern von Unebenheiten in einer auf einem Erdboden angeordneten Grünfläche, wobei die Vorrichtung (10) geeignet ist, an einem Griff (110) eines Golfschlägers (100) befestigt zu werden, umfassend:
ein Befestigungselement (30; 90), mittels dem die Vorrichtung (10) an dem Griff (110) befestigbar ist;
ein Einführelement (20), das geeignet ist, zum Ausbessern der Unebenheiten in den Erdboden eingeführt zu werden;
ein Abdeckungselement (50) zum Abdecken des Einführelements (20), das eine Oberseite (51) und eine Unterseite (52) hat und wenigstens einen an der Unterseite (52) mündenden Hohlraum (53, 54, 55, 56) aufweist, und
ein Verbindungselement (40), das eine Mantelfläche (43, 49) hat, und mittels eines eine Steck-Dreh-Bewegung ermöglichenden Bajonettverschlusses lösbar mit dem Abdeckungselement (50) verbindbar ist;
wobei der Hohlraum (53) geeignet ist, das Einführelement (20) und das Verbindungselement (40) aufzunehmen;
wobei zum Bilden des Bajonettverschlusses das Verbindungselement (40) wenigstens eine Vertiefung (70), die einen Anfangsabschnitt (71) und einen Endabschnitt (72) hat, aufweist und das Abdeckungselement (50) wenigstens einen Vorsprung (60), der in die Vertiefung (70) eingreift und von dem Anfangsabschnitt (71) in den Endabschnitt (72) bewegbar ist, aufweist;
wobei der Vorsprung (60) entgegen der Wirkung einer in einer axialen Richtung (L) wirkenden Rückstellkraft von dem Anfangsabschnitt (71), in dem das Abdeckungselement (50) von dem Verbindungselement (40) trennbar ist, zu dem Endabschnitt (72), in dem der Vorsprung (60) form- und kraftschlüssig in der Vertiefung (70) gehalten ist, bewegbar ist;
wobei die Vertiefung (70) als Nut ausgestaltet ist, die einer Bahnkurve (K) folgend sich entlang der Mantelfläche (43) erstreckt; und
wobei die Bahnkurve (K) im Übergangsbereich von dem Anfangsabschnitt (71) zu dem Endabschnitt (72) einen Tiefpunkt (T) hat.

2. Vorrichtung zum Ausbessern von Unebenheiten in einer auf einem Erdboden angeordneten Grünfläche, wobei die Vorrichtung (10) geeignet ist, an einem Griff (110) eines Golfschlägers (100) befestigt zu werden, umfassend:
ein Befestigungselement (30; 90), mittels dem die Vorrichtung (10) an dem Griff (110) befestigbar ist;
ein Einführelement (20), das geeignet ist, zum Ausbessern der Unebenheiten in den Erdboden eingeführt zu werden;
ein Abdeckungselement (50) zum Abdecken des Einführelements (20), das eine Oberseite (51) und eine Unterseite (52) hat und wenigstens einen an der Unterseite (52) mündenden Hohlraum (53, 54, 55, 56) aufweist, und
ein Verbindungselement (40), das eine Mantelfläche (43, 49) hat, und mittels eines eine Steck-Dreh-Bewegung ermöglichenden Bajonettverschlusses lösbar mit dem Abdeckungselement (50) verbindbar ist;
wobei der Hohlraum (53) geeignet ist, das Einführelement (20) und das Verbindungselement (40) aufzunehmen, und eine Innenfläche (61) hat;
wobei zum Bilden des Bajonettverschlusses das Abdeckungselement (50) wenigstens eine Vertiefung (70), die einen Anfangsabschnitt (71) und einen Endabschnitt (72) hat, aufweist und das Verbindungselement (40) wenigstens einen Vorsprung (60), der in die Vertiefung (70) eingreift und von dem Anfangsabschnitt (71) in den Endabschnitt (72) bewegbar ist, aufweist;
wobei der Vorsprung (60) entgegen der Wirkung einer in einer axialen Richtung (L) wirkenden Rückstellkraft von dem Anfangsabschnitt (71), in dem das Abdeckungselement (50) von dem Verbindungselement (40) trennbar ist, zu dem Endabschnitt (72), in dem der Vorsprung (60) form- und kraftschlüssig in der Vertiefung (70) gehalten ist, bewegbar ist;
wobei die Vertiefung (70) als Nut ausgestaltet ist, die einer Bahnkurve (K) folgend sich entlang der Innenfläche (61) erstreckt; und
wobei die Bahnkurve (K) im Übergangsbereich von dem Anfangsabschnitt (71) zu dem Endabschnitt (72) einen Tiefpunkt (T) hat.

3. Vorrichtung nach Anspruch 1 oder 2, **dadurch gekennzeichnet, dass** die Mantelfläche (43, 49) zylindrisch, insbesondere kreiszylindrisch, ist, wobei vorzugsweise das Verbindungselement (40) sich aus einem oberen Teil und einem unteren Teil, der einen geringeren Durchmesser als der obere Teil hat, zusammensetzt.

4. Vorrichtung nach Anspruch 1, 2 oder 3, **dadurch gekennzeichnet, dass** zumindest im Bereich des Tiefpunktes (T) das Vorzeichen der Steigung der Bahnkurve (K) in dem Anfangsabschnitt (71) umgekehrt ist zu dem Vorzeichen der Steigung in dem Endabschnitt (72), wobei vorzugsweise ein Endanschlag (73) für den Vorsprung (60) den Endabschnitt (72) begrenzt, wobei vorzugsweise die Steigung der Bahnkurve (K) in dem Endabschnitt (72) zu dem Endanschlag (73) hin abnimmt.

5. Vorrichtung nach einem der Ansprüche 1 bis 4, **dadurch gekennzeichnet, dass** das Abdeckungselement (50) zumindest bereichsweise, insbesondere im Bereich des Vorsprungs (60) oder der Vertiefung (70) aus einem elastisch verformbaren Werkstoff gefertigt ist und wobei ferner das Abdeckungselement (50) an der Unterseite (52) eine Kontaktfläche (57) aufweist, die geeignet ist, an einer Stirnfläche (111) des Griffes (110) eines Golfschlägers (100) anzuliegen, wobei vorzugsweise die Kontaktfläche (57) zumindest abschnittsweise Stellen (54, 55, 56) mit einer reibungsvermindernden Oberfläche aufweist.

6. Vorrichtung nach Anspruch 5, **dadurch gekennzeichnet, dass** das Abdeckungselement (50) an der Oberseite (51) eine Halterung (58) aufweist, die geeignet ist, einen insbesondere chipförmigen Ballmarker (59) zu halten.

7. Vorrichtung nach einem der Ansprüche 1 bis 6, **dadurch gekennzeichnet, dass** das Einführelement (20) einen Halteabschnitt (21), der vorzugsweise eben ausgestaltet ist, und von dem Halteabschnitt (21) abstehende Zinken (22), die vorzugsweise gewölbt ausgestaltet sind, aufweist, wobei das Verbindungselement (40) an der Oberseite (41) eine erste Öffnung (44) aufweist, in welcher der Halteabschnitt (21) angeordnet ist, wobei vorzugsweise das Verbindungselement (40) an der Mantelfläche (43) eine zweite Öffnung (45) aufweist, in der eine den Halteabschnitt (21) fixierende Sicherungsschraube (46) aufgenommen ist.

8. Vorrichtung nach einem der Ansprüche 1 bis 7, **dadurch gekennzeichnet, dass** das Befestigungselement (30; 90) und das Verbindungselement (40) durch eine Schraubverbindung (80, 81) miteinander verbunden sind, wobei vorzugsweise das Verbindungselement (40) zur Aufnahme einer sich insbesondere in der axialen Richtung (L) erstreckenden Schraube (80) mit einer sich von der Oberseite (41) bis zur Unterseite (42) erstreckenden Durchgangsöffnung (47) versehen ist und wobei weiter vorzugsweise das Befestigungselement (30) eine Oberseite (31) und eine Unterseite (32) hat und zum Abstützen einer mit der Schraube (80) zusammenwirkenden Mutter (81) mit einer insbesondere an der Unterseite (32) ausgebildeten Anlagefläche (34) versehen ist.

9. Vorrichtung nach Anspruch 8, **dadurch gekennzeichnet, dass** das Verbindungselement (40) an der Unterseite (42) eine Klemmfläche (48) aufweist, die sich unter einem ersten Winkel (α) schräg zu der axialen Richtung (L) erstreckt, und dass das Befestigungselement (30) an der Oberseite (31) eine Klemmfläche (38) aufweist, die ein Zentrum (Z) hat und sich unter einem zweiten Winkel (β) schräg zu der axialen Richtung (L) erstreckt, wobei vorzugsweise der erste Winkel (α) und der zweite Winkel (β) Nebenwinkel bilden und wobei weiter vorzugsweise der erste Winkel (α) zwischen 130° und 170°, insbesondere zwischen 140° und 160°, und der zweite Winkel (β) zwischen 10° und 50°, insbesondere zwischen 20° und 40°, betragen und wobei das Befestigungselement (30) ein sich von der Oberseite (31) bis zu der Anlagefläche (34) in der axialen Richtung (L) erstreckendes Langloch (35) aufweist, das die Schraube (80) mit radialem Spiel aufnimmt und außerhalb des Zentrums (Z) der Klemmfläche (38) angeordnet ist.

10. Vorrichtung nach Anspruch 8, **dadurch gekennzeichnet, dass** das Befestigungselement (90) wenigstens ein aus einem verformbaren Werkstoff bestehendes Klemmelement (91) und wenigstens ein das Klemmelement (91) beaufschlagendes Druckelement (92) umfasst, wobei vorzugsweise das Klemmelement (91) und das Druckelement (92) mittels der Schraubverbindung (80, 81) gegeneinander verspannt sind.

11. Vorrichtung nach einem der Ansprüche 1 bis 7, **dadurch gekennzeichnet, dass** das Befestigungselement (30) und das Verbindungselement (40) einteilig ausgestaltet sind, wobei vorzugsweise das Befestigungselement (30) eine Umfangsfläche (33) aufweist, die geeignet ist, stoffschlüssig an einer Innenfläche (113) des Griffes (110) befestigt zu werden.

12. Golfschläger, insbesondere Putter, umfassend:
einen Schaft (105),
einen Griff (110), der an einem Ende des Schaftes (105) angeordnet ist, und
einen Kopf (120), der an dem anderen Ende des Schaftes (105) angeordnet ist,
**gekennzeichnet durch** eine Vorrichtung (10) nach einem der Ansprüche 1 bis 11, die an dem Griff (110) befestigt ist.

13. Golfschläger nach Anspruch 12, **dadurch gekennzeichnet, dass** der Griff (110) einen Hohlraum (112) aufweist, der eine Innenfläche (113) hat und in dem das Befestigungselement (30) und/oder das Verbindungselement (40) angeordnet sind.

14. Golfschläger nach Anspruch 13, **dadurch gekennzeichnet, dass** das Befestigungselement (30) mittels Kraftschluss mit dem Griff (110) verbunden ist, wobei vorzugsweise die Umfangsfläche (33) des Befestigungselementes (30) oder das Klemmelement (91) kraftschlüssig an der Innenfläche (113) des Griffes (110) anliegen.

15. Golfschläger nach Anspruch 13, **dadurch gekennzeichnet, dass** das Befestigungselement (30) mittels Stoffschluss mit dem Griff (110) verbunden ist, wobei vorzugsweise die Umfangsfläche (33) des Befestigungselementes (30) stoffschlüssig an der Innenfläche (113) des Griffes (110) anliegt.

## Claims

1. A device for repairing uneven areas in a green space disposed on a ground, the device (10) being suitable for being attached to a grip (110) of a golf club (100), comprising:
an attaching element (30; 90) by means of which the device (10) can be attached to the grip (110);
an insertion element (20) suitable for being inserted into the ground for repairing the uneven areas;
a covering element (50) for covering the insertion element (20) comprising a top side (51) and a bottom side (52) and at least one cavity (53, 54, 55, 56) opening on the bottom side (52); and
a connecting element (40) that comprises a shell surface (43, 49) and can be releasably connected to the covering element (50) by means of a bayonet joint permitting a plug-and-rotate-movement;
wherein the cavity (53) is suitable for receiving the insertion element (20) and the connecting element (40);
wherein the connecting element (40) comprises at least one recess (70) having a starting segment (71) and an end segment (72) for forming the bayonet joint, and the covering element (50) comprises at least one protrusion (60) engaging in the recess (70) and being displaceable from the starting segment (71) to the end segment (72);
wherein the protrusion (60) is displaceable against the action of a return force acting in an axial direction (L) from the starting segment (71), in which the covering element (50) is separable from the connecting element (40), to the end segment (72), in which the protrusion (60) is held in the recess (70) in a form and force fitting manner;
wherein the recess (70) is implemented as a groove extending along the shell surface (43) and following a trajectory (K); and
wherein the trajectory (K) has a minimum (T) in the transition region from the starting segment (71) to the end segment (72).

2. A device for repairing uneven areas in a green space disposed on a ground, the device (10) being suitable for being attached to a grip (110) of a golf club (100), comprising:
an attaching element (30; 90) by means of which the device (10) can be attached to the grip (110);
an insertion element (20) suitable for being inserted into the ground for repairing the uneven areas;
a covering element (50) for covering the insertion element (20) comprising a top side (51) and a bottom side (52) and at least one cavity (53, 54, 55, 56) opening on the bottom side (52); and
a connecting element (40) that comprises a shell surface (43, 49) and can be releasably connected to the covering element (50) by means of a bayonet joint permitting a plug-and-rotate-movement;
wherein the cavity (53) is suitable for receiving the insertion element (20) and the connecting element (40) and comprises an inner surface (61);
wherein the covering element (50) comprises at least one recess (70) having a starting segment (71) and an end segment (72) for forming the bayonet joint, and the connecting element (40) comprises at least one protrusion (60) engaging in the recess (70) and being displaceable from the starting segment (71) to the end segment (72);
wherein the protrusion (60) is displaceable against the action of a return force acting in an axial direction (L) from the starting segment (71), in which the covering element (50) is separable from the connecting element (40), to the end segment (72), in which the protrusion (60) is held in the recess (70) in a form and force fitting manner;
wherein the recess (70) is implemented as a groove extending along the inner surface (61) and following a trajectory (K); and
wherein the trajectory (K) has a minimum (T) in the transition region from the starting segment (71) to the end segment (72).

3. The device according to claim 1 or 2, **characterized in that** the shell surface (43, 49) is cylindrical, particularly circular cylindrical, wherein the connecting element (40) preferably comprises a top part and a bottom part having a smaller diameter than the top part.

4. The device according to claim 1, 2 or 3, **characterized in that** the sign of the slope of the trajectory (K) in the starting segment (71) is opposite the sign of the slope in the end segment (72) at least in the region of the minimum (T), wherein preferably an end stop (73) for the protrusion (60) bounds the end segment (72), wherein the slope of the trajectory (K) further preferably decreases in the end segment (72) toward the end stop (73).

5. The device according to any one of the claims 1 to 4, **characterized in that** the covering element (50) is manufactured of an elastically deformable material at least in regions, particularly in the region of the protrusion (60) or the recess (70), and wherein further preferably the covering element (50) comprises a contact surface (57) on the bottom side (52) thereof, suitable for making contact with an end surface (111) of the grip (110) of a golf club (100), wherein the contact surface (57) preferably comprises locations (54, 55, 56) having a surface for reducing friction at least in segments.

6. The device according to claim 5, **characterized in that** the covering element (50) comprises a mounting element (58) on the top side (51) thereof, suitable for retaining a ball marker (59) particularly in the form of a chip.

7. The device according to any one of the claims 1 to 6, **characterized in that** the insertion element (20) comprises a retaining segment (21), preferably flat in design, and prongs (22), protruding away from the retaining segment (21) and preferably curved in design, wherein the connecting element (40) comprises a first opening (44) on the top side (41) thereof in which the retaining segment (21) is disposed, wherein the connecting element (40) preferably comprises a second opening (45) on the shell surface (43) thereof, in which a retaining screw (46) fixing the retaining segment (21) is received.

8. The device according to any one of the claims 1 to 7, **characterized in that** the attaching element (30; 90) and the connecting element (40) are connected by means of a screw connection (80, 81), wherein preferably the connecting element (40) has a pass-through opening (47) extending from the top side (41) to the bottom side (42) in order to receive a screw (80), which is particularly extending in the axial direction (L) and wherein further preferably the attaching element (30) comprises a top side (31) and a bottom side (32) and has a contact surface (34) implemented particularly on the bottom side (32) for supporting a nut (81) interacting with the screw (80).

9. The device according to claim 8, **characterized in that** the connecting element (40) comprises a clamping surface (48) on the bottom side (42) thereof extending inclined at a first angle (α) to the axial direction (L), and that the attaching element (30) comprises a clamping surface (38) on the top side (31) thereof comprising a center (Z) and extending inclined at a second angle (β) to the axial direction (L), wherein the first angle (α) and the second angle (β) preferably form supplementary angles, and wherein further preferably the first angle (α) is between 130° and 170°, particularly between 140° and 160°, and the second angle (β) is between 10° and 50°, particularly between 20° and 40°, and wherein the attaching element (30) comprises an elongated hole (35) extending from the top side (31) to the contact surface (34) in the axial direction (L) receiving the screw (80) with radial clearance and being disposed outside of the center (Z) of the clamping surface (38).

10. The device according to claim 8, **characterized in that** the attaching element (90) comprises at least one clamping element (91) made of a deformable material and comprising at least one pressure element (92) acting on the clamping element (91), wherein the clamping element (91) and the pressure element (92) are preferably pressed against each other by means of the screw connection (80, 81).

11. The device according to any one of the claims 1 to 7, **characterized in that** the attaching element (30) and the connecting element (40) are implemented as a single piece, wherein the attaching element (30) preferably comprises a circumferential surface (33) suitable for being adhesively attached to an inner surface (113) of the grip (110).

12. A golf club, particularly a putter, comprising:
a shaft (105),
a grip (110) disposed at one end of the shaft (105), and
a head (120) disposed at the other end of the shaft (105),
**characterized by** a device (10) according to any one of the claims 1 to 11 attached to the grip (110).

13. The golf club according to claim 12, **characterized in that** the grip (110) comprises a cavity (112) having an inner surface (113) and in which the attaching element (30) and/or the connecting element (40) are disposed.

14. The golf club according to claim 13, **characterized in that** attaching element (30) is connected to the grip (110) by means of a force fit, wherein the circumferential surface (33) of the attaching element (30) or the clamping element (91) preferably makes contact with the inner surface (113) of the grip (110) in a force-fit manner.

15. The golf club according to claim 13, **characterized in that** the attaching element (30) is adhesively connected to the grip (110), wherein the circumferential surface (33) of the attaching element (30) preferably makes contact with the inner surface (113) of the grip (110) in an adhesive manner.

## Revendications

1. Dispositif pour rectifier des irrégularités de surface d'une pelouse disposée sur un sol, le dispositif (10) étant apte à être fixé sur une poignée (110) d'un club de golf (100), comportant :
un élément de fixation (30 ; 90) au moyen duquel le dispositif (10) est susceptible d'être fixé sur la poignée (110) ;
un élément d'introduction (20) qui est apte à être introduit dans le sol pour rectifier les irrégularités de surface ;
un élément de recouvrement (50) pour recouvrir l'élément d'introduction (20), qui comprend une face supérieure (51) et une face inférieure (52) et au moins une cavité (53, 54, 55, 56) qui débouche sur la face inférieure (52) ; et
un élément de liaison (40) qui présente une surface enveloppe (43, 49) et qui est susceptible d'être relié de façon détachable à l'élément de recouvrement (50) au moyen d'une fermeture à baïonnette permettant un mouvement d'enfichage/rotation ;
dans lequel
la cavité (53) est apte à recevoir l'élément d'introduction (20) et l'élément de liaison (40) ;
pour former la fermeture à baïonnette, l'élément de liaison (40) présente au moins un renfoncement (70) qui présente une portion initiale (71) et une portion terminale (72), et l'élément de recouvrement (50) présente au moins une saillie (60) qui s'engage dans le renfoncement (70) et qui est mobile depuis la portion initiale (71) jusque dans la portion terminale (72) ;
la saillie (60) est mobile à l'encontre de l'effet d'une force de rappel agissant dans une direction axiale (L) depuis la portion initiale (71) dans laquelle l'élément de recouvrement (50) est séparable de l'élément de liaison (40), jusqu'à la portion terminale (72) dans laquelle la saillie (60) est retenue dans le renfoncement (70) par coopération de formes et de forces ;
le renfoncement (70) est réalisé sous forme de gorge qui s'étend le long de la surface enveloppe (43) en suivant une trajectoire (K) ; et
la trajectoire (K) présente son point le plus bas (T) dans la zone de transition de la portion initiale (71) à la portion terminale (72).

2. Dispositif pour rectifier des irrégularités de surface d'une pelouse disposée sur un sol, le dispositif (10) étant apte à être fixé sur une poignée (110) d'un club de golf (100), comportant :
un élément de fixation (30 ; 90) au moyen duquel le dispositif (10) est susceptible d'être fixé sur la poignée (110) ;
un élément d'introduction (20) qui est apte à être introduit dans le sol pour rectifier les irrégularités de surface ;
un élément de recouvrement (50) pour recouvrir l'élément d'introduction (20) qui comprend une face supérieure (51) et une face inférieure (52) et au moins une cavité (53, 54, 55, 56) qui débouche sur la face inférieure (52) ; et
un élément de liaison (40) qui présente une surface enveloppe (43, 49) et qui est susceptible d'être relié de façon détachable à l'élément de recouvrement (50) au moyen d'une fermeture à baïonnette permettant un mouvement d'enfichage/rotation ;
dans lequel
la cavité (53) est apte à recevoir l'élément d'introduction (20) et l'élément de liaison (40), et présente une surface intérieure (61) ;
pour former la fermeture à baïonnette, l'élément de recouvrement (50) présente au moins un renfoncement (70) qui présente une portion initiale (71) et une portion terminale (72), et l'élément de liaison (40) présente au moins une saillie (60) qui s'engage dans le renfoncement (70) et qui est mobile depuis la portion initiale (71) jusque dans la portion terminale (72) ;
la saillie (60) est mobile à l'encontre de l'effet d'une force de rappel agissant dans une direction axiale (L) depuis la portion initiale (71) dans laquelle l'élément de recouvrement (50) est séparable de l'élément de liaison (40), jusqu'à la portion terminale (72) dans laquelle la saillie (60) est retenue dans le renfoncement (70) par coopération de formes et de forces ;
le renfoncement (70) est réalisé sous forme de gorge qui s'étend le long de la surface intérieure (61) en suivant une trajectoire (K) ; et
la trajectoire (K) présente son point le plus bas (T) dans la zone de transition de la portion initiale (71) à la portion terminale (72).

3. Dispositif selon la revendication 1 ou 2, **caractérisé en ce que** la surface enveloppe (43, 49) est cylindrique, en particulier cylindrique à base circulaire, et l'élément de liaison (40) se compose de préférence d'une partie supérieure et d'une partie inférieure qui présente un diamètre inférieur à celui de la partie supérieure.

4. Dispositif selon la revendication 1, 2 ou 3, **caractérisé en ce qu'**au moins dans la zone du point le plus bas (T), le signe de la pente de la trajectoire (K) dans la portion initiale (71) est inverse au signe de la pente dans la portion terminale (72), et de préférence une butée d'extrémité (73) pour la saillie (60) délimite la portion terminale (72), la pente de la trajectoire (K) dans la portion terminale (72) décroissant vers la butée d'extrémité (73).

5. Dispositif selon l'une des revendications 1 à 4, **caractérisé en ce que** l'élément de recouvrement (50) est fabriqué au moins localement, en particulier dans la zone de la saillie (60) ou du renfoncement (70), d'un matériau élastiquement déformable, et l'élément de recouvrement (50) présente en outre sur la face inférieure (52) une surface de contact (57) apte à venir en appui contre une surface frontale (111) de la poignée (110) d'un club de golf (100), la surface de contact (57) présentant de préférence au moins localement des endroits (54, 55, 56) pourvus d'une surface réduisant la friction.

6. Dispositif selon la revendication 5, **caractérisé en ce que** l'élément de recouvrement (50) comprend sur la face supérieure (51) un élément de retenue (58) qui est apte à retenir un marqueur de balle (59) en particulier en forme de plaquette.

7. Dispositif selon l'une des revendications 1 à 6, **caractérisé en ce que** l'élément d'introduction (20) comprend une portion de retenue (21) qui est de préférence réalisée plane, et des dents (22) qui font saillie de la portion de retenue (21) qui sont de préférence réalisées bombées, l'élément de liaison (40) présentant sur la face supérieure (41) une première ouverture (44) dans laquelle est agencée la portion de retenue (21), l'élément de liaison (40) présentant de préférence une seconde ouverture (45) sur la surface enveloppe (43), dans laquelle est logée une vis de blocage (46) fixant la portion de retenue (21).

8. Dispositif selon l'une des revendications 1 à 7, **caractérisé en ce que** l'élément de fixation (30 ; 90) et l'élément de liaison (40) sont reliés entre eux par une liaison vissée (80, 81), l'élément de liaison (40) étant pourvu de préférence d'une ouverture traversante (47) s'étendant de la face supérieure (41) jusqu'à la face inférieure (42) et destinée à recevoir une vis (80) qui s'étend en particulier dans la direction axiale (L), et de plus l'élément de fixation (30) possède en outre de préférence une face supérieure (31) et une face inférieure (32) et est pourvu d'une surface d'appui (34) réalisée en particulier sur la face inférieure (32) pour soutenir un écrou (81) coopérant avec la vis (80).

9. Dispositif selon la revendication 8, **caractérisé en ce que** sur la face inférieure (42) l'élément de liaison (40) présente une surface de coincement (48) qui s'étend sous un premier angle (□) en oblique par rapport à la direction axiale (L), et **en ce que** sur la face supérieure (31) l'élément de fixation (30) présente une surface de coincement (38) qui présente un centre (Z) et qui s'étend sous un second angle (□) en oblique par rapport à la direction axiale (L), et de préférence le premier angle (□) et le second angle (□) forment des angles adjacents, et de plus de préférence le premier angle (□) est compris entre 130° et 170°, en particulier entre 140° et 160°, et le second angle (□) est compris entre 10° et 50°, en particulier entre 20° et 40°, l'élément de fixation (30) présentant un trou oblong (35) qui s'étend depuis la face supérieure (31) jusqu'à la surface d'appui (34) dans la direction axiale (L) et qui reçoit la vis (80) avec jeu radial et qui est disposé à l'extérieur du centre (Z) de la surface de coincement (38).

10. Dispositif selon la revendication 8, **caractérisé en ce que** l'élément de fixation (90) comprend au moins un élément de coincement (91) constitué d'un matériau déformable, et au moins un élément de compression (92) sollicitant l'élément de coincement (91), l'élément de coincement (91) et l'élément de compression (92) étant serrés l'un contre l'autre de préférence au moyen de la liaison vissée (80, 81).

11. Dispositif selon l'une des revendications 1 à 7, **caractérisé en ce que** l'élément de fixation (30) et l'élément de liaison (40) sont réalisés d'un seul tenant, et l'élément de fixation (30) présente de préférence une surface périphérique (33) qui est apte à être fixée par coopération de matières sur une surface intérieure (113) de la poignée (110).

12. Club de golf, en particulier "putter", comportant :
un manche (105),
une poignée (110) qui est agencée à une extrémité du manche (105), et
une tête (120) qui est agencée à l'autre extrémité du manche (105), **caractérisé par** un dispositif (10) selon l'une des revendications 1 à 11, qui est fixé sur la poignée (110).

13. Club de golf selon la revendication 12, **caractérisé en ce que** la poignée (110) présente une cavité (112) qui possède une surface intérieure (113) et dans laquelle est/sont agencé(s) l'élément de fixation (30) et/ou l'élément de liaison (40).

14. Club de golf selon la revendication 13, **caractérisé en ce que** l'élément de fixation (30) est relié par coopération de forces à la poignée (110), la surface périphérique (33) de l'élément de fixation (30) ou l'élément de coincement (91) prenant appui de préférence par coopération de forces contre la surface intérieure (113) de la poignée (110).

15. Club de golf selon la revendication 13, **caractérisé en ce que** l'élément de fixation (30) est relié par coopération de matières avec la poignée (110), et la surface périphérique (33) de l'élément de fixation (30) prend appui de préférence par coopération de matières contre la surface intérieure (113) de la poignée (110).
